(19) Europäisches Patentamt
European Patent Office
Office européen des brevets

(11) EP 2 685 414 A1

(12) EUROPEAN PATENT APPLICATION

(43) Date of publication:
15.01.2014 Bulletin 2014/03

(51) Int Cl.:
G06Q 30/02 (2012.01)

(21) Application number: 13003480.4

(22) Date of filing: 10.07.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.07.2012 US 201261670418 P
12.03.2013 US 201313796089

(71) Applicant: The Nielsen Company (US), LLC
Schaumburg, IL 60173 (US)

(72) Inventors:
• Brixius, Nathan W.
Evanston, IL 60201 (US)
• Poortinga, Vincent E.
Arlington Heights, IL 60005 (US)
• Link, Ross
Evanston, IL 60201 (US)
• Burke, Peter
Chicago, IL 60611 (US)
• Shah, Shweta
Glenview, IL 60025 (US)

(74) Representative: Samson & Partner
Widenmayerstrasse 5
80538 München (DE)

(54) **Methods and apparatus to evaluate model stability and fit**

(57) Methods, apparatus, systems and articles of manufacture are disclosed to evaluate model stability and fit. An example method disclosed herein includes building a fit function based on causal factors associated with a marketing mix model, building a stability function based on override factors associated with corresponding ones of the causal factors, and integrating scaling factors into the stability function to facilitate a combined regression analysis of the fit function and the stability function, the scaling factors respectively associated with corresponding causal factors.

FIG. 1

**Description**

RELATED APPLICATION

This patent claims priority to U.S. Provisional Patent Application Serial No. 61/670,418, which was filed on July 11, 2012 and is hereby incorporated herein by reference in its entirety.

FIELD OF THE DISCLOSURE

This disclosure relates generally to marketing mix modeling, and, more particularly, to methods and apparatus to evaluate model stability and fit.

BACKGROUND

In recent years, market competition has evolved to include different types of merchants including retailers and/or wholesalers. Additionally, on-line retail presence has become a growing presence in the market that may influence consumer shopping behaviors.

SUMMARY OF THE INVENTION

Methods, apparatus, computer programs to evaluate model stability and fit as defined in the appended set of claims are disclosed. Some disclosed example methods include building a fit function based on causal factors associated with a marketing mix model,
building a stability function based on override factors associated with corresponding ones of the causal factors, and integrating scaling factors into the stability function to facilitate a combined regression analysis of the fit function and the stability function, the scaling factors respectively associated with corresponding causal factors. Some examples increase a mathematical influence of the override factors in response to increasing the scaling factors, while other examples increase a mathematical influence of previous regression coefficient values in response to decreasing the scaling factors. In some examples, the scaling factors include a ratio of causal factor values and causal weight values, and in still other examples the fit function comprises a regression model to minimize a difference between predicted dependent variables and actual dependent variables. Other examples include the stability function having a regression model to minimize a difference between previously calculated regression coefficients and the override factors. Additional examples include generating coefficients of the combined regression analysis, the coefficients based on a penalty factor to influence a mathematical measure of fit. Other examples include iterating the combined regression analysis with a set of penalty factors to generate a plurality of output models to compare with the mathematical measure of fit.
Example apparatus to evaluate model stability and fit include a causal factor manager to build a fit function based on causal factors associated with a marketing mix model, and to build a stability function based on override factors associated with corresponding ones of the causal factors, and a scaling factor engine to integrate scaling factors into the stability function to facilitate a combined regression analysis of the fit function and the stability function, the scaling factors respectively associated with corresponding causal factors. Some example apparatus include an override factor manager to increase a mathematical influence of the override factors in response to increasing the scaling factors. Other example apparatus include a causal factor weighting engine to increase a mathematical influence of previous regression coefficient values in response to decreasing the scaling factors. In some examples, the scaling factor engine is to apply a ratio of causal factor values and causal weight values. Still other example apparatus include a regression engine to apply a regression model to minimize a difference between predicted dependent variables and actual dependent variables. Some example apparatus include a regression engine to apply a regression model to minimize a difference between previously calculated regression coefficients and the override factors. While still other example apparatus include a coefficient manager to generate coefficients of the combined regression analysis, the coefficients based on a penalty factor to influence a mathematical measure of fit.
Example disclosed articles of manufacture storing machine readable instructions to evaluate model stability and fit that, when executed, cause the machine to build a fit function based on causal factors associated with a marketing mix model, build a stability function based on override factors associated with corresponding ones of the causal factors, and integrate scaling factors into the stability function to facilitate a combined regression analysis of the fit function and the stability function, the scaling factors respectively associated with corresponding causal factors. Some example disclosed articles of manufacture storing machine readable instructions cause the machine to increase a mathematical influence of the override factors in response to increasing the scaling factors, while other instructions cause the machine to increase a mathematical influence of previous regression coefficient values in response to decreasing the scaling factors. In some examples, the disclosed instructions, when executed, cause the machine to apply the scaling factors as a ratio of causal factor values and causal weight values. Other disclosed example instructions, when executed, cause the machine to minimize a difference between predicted dependent variables and actual dependent variables. Still other disclosed example instructions, when executed, cause the machine to minimize a difference between previously calculated regression coefficients and the override factors. Some disclosed example instructions, when executed, cause the machine to generate coefficients of the combined regression analysis, the coefficients based on a penalty factor to influence a mathematical measure of fit, and in some cases, to iterate the combined regression analysis with a set of penalty factors to generate a plurality of output models to compare with the mathematical measure of fit.

BRIEF DESCRIPTION OF THE DRAWINGS

FIG. 1 is a schematic illustration of a combination engine to evaluate model stability and fit constructed in accordance with the teachings of this disclosure.
FIG. 2 is an example matrix of a regression fit function constructed by the example combination engine of FIG. 1.
FIG. 3 is an example matrix of a stability function constructed by the example combination engine of FIG. 1.
FIG. 4 is an example comparison chart generated by the example combination engine of FIG. 1 to compare measures of fit and stability for regression models that include priors.
FIGS. 5-9 are flowcharts representative of example machine readable instructions which may be executed to evaluate model stability and fit.
FIG. 10 is a block diagram of an example system that may execute the example machine readable instructions of FIGS. 5-9 to implement the example combination engine of FIG. 1.

DETAILED DESCRIPTION

Market analysts may be chartered with one or more tasks related to understanding how different factors impact sales over time. The market analysts may exert such efforts in response to client requests. Such clients may be manufacturers, retailers, merchants and/or wholesalers that wish to appreciate and/or otherwise understand factors that help and/or hurt sales. Factors capable of affecting sales include, but are not limited to, promotional activity (e.g., television promotions, radio promotions, newsprint promotions, online promotions, etc.), macro-economic factors and seasonality.
To better understand what relationships exist between one or more factors, a statistical regression analysis may be performed using independent and dependent variables related to the client sales environment. Independent variables may include factors, some of which are under the control of the client such as, for example, promotion media types (e.g., television, radio, etc.), promotion target demographics, promotion dates and/or time-of-day, etc. The regression analysis provides the market analyst with one or more coefficients indicative of a manner in which independent variable(s) affect dependent variables. In other words, the values of the one or more coefficient weights indicate a degree to which, for example, promotional activity affects sales.
Implementing a regression model for a marketing mix analysis requires analyst design efforts to select one or more factors (e.g., seasonality, promotional activity) that are believed to have some influence on one or more dependent variables (e.g., sales of a product). The regression output yields coefficients corresponding to each factor of interest. For example, if a regression model employs factors of promotion and seasonality, then the regression output includes a coefficient corresponding to promotion and a coefficient corresponding to seasonality. Such coefficients may then be used to generate one or more predictions of sales. Comparing a previously determined coefficient and/or set of coefficients to subsequently developed historical output data allows the analyst to identify a measure of fit. In other words, a relatively high measure of fit for a regression model indicates that subsequently measured sales data closely tracks the regression model.
When an analyst designs a marketing mix analysis (e.g., building one or more regression models in view of client provided objectives), a relatively large amount of time is consumed tuning the model. Tuning may include identifying which factors to include in the model and/or corresponding weighting values for each factor. In some examples, efforts are employed to maintain consistency in model coefficient output values associated with previously executed regressions. A desire to reflect a degree of consistency to previously executed regressions and/or other models may derive from historical observations that the model can be trusted. To the extent factors exist (independent variables), then the analyst can incorporate such factors into the model and apply weighting values. The process of designing a model to reflect consistency with a previously designed model is referred to herein as a measure of fit.
One problem with relying on fit includes an over-reliance (overfitting) on efforts to fit the model to generate output believed to be consistent with input data. Overfitting creates a tradeoff in the model between fitness with expected output and predictive power. In the event the model is designed to fit a previous model and/or previous input data, predictive accuracy may suffer because other and/or new influences (factors) may not be weighted properly. Overfitting also includes analyst efforts to incorporate as many factors as available, regardless of whether such factors are relevant.
In some examples, analysts attempt to detect instances in which overfitting occurs. For example, the analyst may withhold some actual sales data and run a regression analysis on only the remaining portion of actual sales data. After the analysis is performed using the model, the analyst performs a back-test by comparing the predicted versus actual sales in view of (a) the data fed into the model and (b) the data previously withheld from the model. In the event the model suffers from overfitting, the model output will perform very well (e.g., a relatively close measure of fit) when analyzing the initially input sales data, and the model will perform very poorly (e.g., a relatively unsynchronized measure of fit) when analyzing the input data withheld from the model.

Example methods, apparatus, systems and/or articles of manufacture disclosed herein reduce analyst model design efforts by incorporating priors into a regression analysis for a marketing mix analysis. As used herein, a "prior" is a factor coefficient value that is different from a corresponding factor coefficient value generated by a regression analysis. In other words, a prior is an override coefficient value that reflects a belief of a relative importance and/or effectiveness of a factor. Each prior (as used herein, the term "prior" will be used interchangeably with "override factor") includes a corresponding weight value to reflect a level of confidence in the validity of the prior. For example, a prior weight of zero ("0") may indicate a complete absence of confidence that the prior is to be mathematically considered during a marketing mix analysis. On the other hand, a prior weight of one ("1") may indicate the strongest mathematical application of the value of the prior. Unlike a measure of fit (which is an indication of how well a model matches observations), a countervailing measure of stability indicates a degree to which a model adheres to the override factor(s). Stated differently, measures of fit and measures of stability for a model exhibit a degree of tension in which a relatively strong measure of fit may largely ignore priors, while a relatively strong measure of stability may favor the priors at the expense of fitness.

In some examples, if a regression analysis is performed with a factor related to a promotion, then the regression will return a coefficient indicative of the degree to which the promotion impacted sales. For instance, assume the coefficient returned and/or otherwise calculated as a result of the regression analysis has a value of 0.10. However, also assume that the analyst has other market information that would indicate the promotion actually has a bigger contributory effect than what was returned by the regression analysis. The analyst may, instead, believe that the coefficient would be more accurate if it had a value of 0.15. In other words, the analyst has learned through some other information that the factor related to the promotion is more influential.

Despite the analyst having one or more alternate sources of information that may indicate one or more factor coefficient values is either too high or too low, because such information is not a factor itself, it cannot be incorporated into a regression analysis. In other words, priors (override factors) are not, themselves, factors that may operate within the mathematical confines of a regression analysis. To allow an analyst to continue using regression-based analysis techniques, example methods, apparatus, systems and/or articles of manufacture disclosed herein incorporate one or more priors, corresponding prior weights and/or penalty values in a manner that fits within a regression-based mathematical format. As such, the analyst can conduct the marketing mix analysis in view of any number of penalty values and/or priors to generate predictive coefficients having different measures of fit and/or stability.

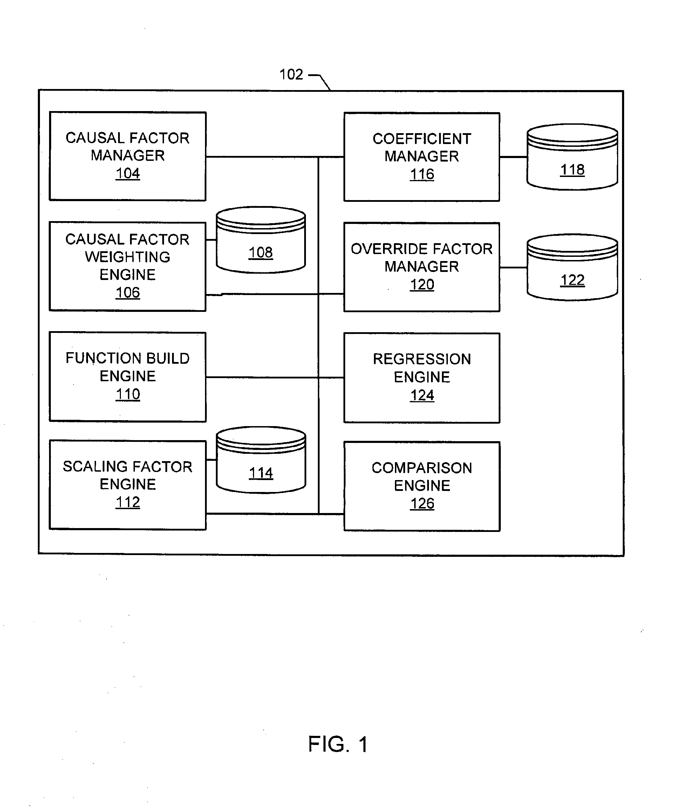

FIG. 1 is a schematic illustration of a combination engine 102 to evaluate model stability and fit. In the illustrated example of FIG. 1, the combination engine 102 includes a causal factor manager 104, a causal factor weighting engine 106 communicatively connected to a causal factor weight storage 108, a function build engine 110, a scaling factor engine 112 communicatively connected to a scaling factor storage 114, a coefficient manager 116 communicatively connected to a coefficient storage 118, an override factor manager 120 communicatively connected to an override factor storage 122, a regression engine 124 and a comparison engine 126.

In operation, the example combination engine 102 builds a regression fit function based on one or more factors of interest, and calculates one or more scaling factors to serve as a link to facilitate regression analysis in view of prior (override factor) inputs. Additionally, the example combination engine 102 builds a stability function based on one or more priors (override factors) using the scaling factors and performs a regression on the combined fit and stability functions so that measures of fit and stability can be evaluated for the model design(s).

The example causal factor manager 104 identifies and/or otherwise selects causal factors of interest. As described above, causal factors relate to independent variables of a mixed market analysis study that may have an effect on dependent variables, such as product sales. The example causal factors may relate to seasonality, promotional activity and/or base price set points. Each causal factor of interest may not have the same influence on the dependent variables, so the example causal factor weighting engine 106 assigns each causal factor a corresponding weight value. Weight values may be stored in the example causal factor weight storage 108, and may be modified based on, for example, known influences related to the causal factor. For example, in the event on-line promotional activity efforts are increased, then one or more weight values associated with that causal factor may be increased (e.g., by applying a larger weighting value between zero and one).

The example function build engine 110 of FIG. 1 configures the dependent variables and fitted variables for minimization operations in a manner consistent with regression analysis techniques. An example fit function may be built and/or otherwise constructed by the example function build engine 110 in a manner consistent with example Equation 1.

$$\sum_{j=1}^{N} w_j (y_j - \overline{y_j})^2$$

*Equation 1.*

In the illustrated example of Equation 1, $w_j$ represents a weighting value for the $j^{th}$ factor, $N$ represents a number of factors of interest, and $y_j - \overline{y_j}$ represents a difference between predicted and actual sales. While example Equation 1 is a functional form of a regression fit function, the example function build engine 110 may also represent and/or otherwise build the fit function in a matrix format.

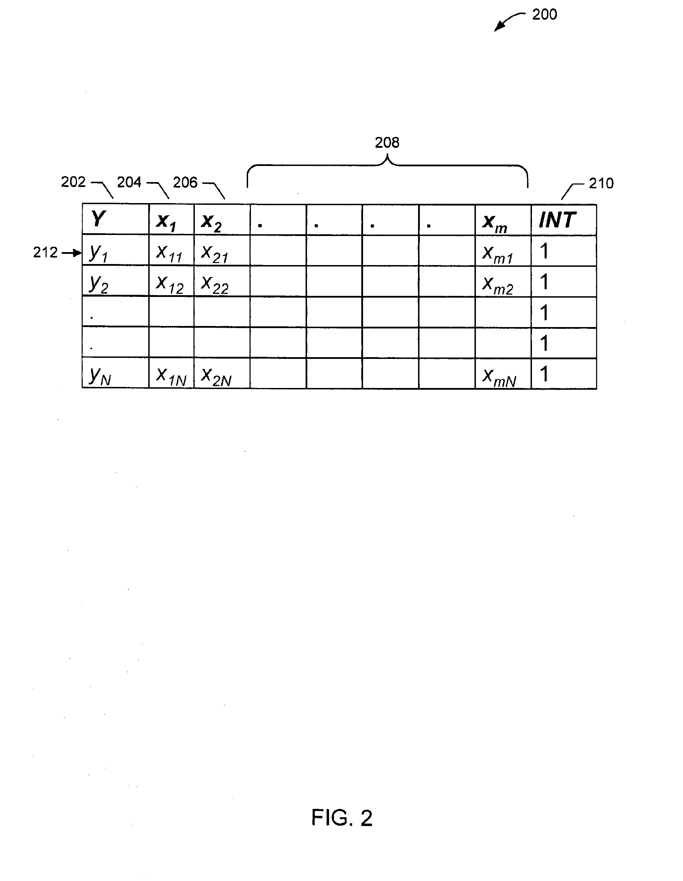

FIG. 2 illustrates an example matrix representation 200 of the regression fit function that is consistent with the functional form of example Equation 1. In the illustrated example of FIG. 2, the matrix representation 200 includes a dependent variable column 202, a first factor of interest column 204 (e.g., a first independent variable), a second factor of interest column 206 (e.g., a second independent variable), and any number of additional factors of interest 208 (e.g., additional independent variables). The example matrix representation 200 also includes an intercept column 210 to accommodate for circumstances in which particular factor activity did not occur (e.g., values of zero for one or more factors), but sales still occur. In other words, the example intercept column 210 refers to core sales (e.g., baseline sales or other baseline activity) that occur absent factor influence. Each row of the example matrix representation 200 of the regression fit function represents successive time periods within which a marketing mix analysis is to occur. For example, a first row 212 refers to a first week of activity in which causal factors may contribute to an effect of the dependent variable $y_1$. Continuing with the aforementioned example, the example first factor of interest ($x_1$) 204 may represent television promotional activity, and $x_{11}$ may represent an amount of television promotional activity for the first week 212. Similarly, if the example second factor of interest ($x_2$) 206 represents radio promotional activity, then $x_{21}$ represents an amount of radio promotional activity for the first week 212.

As described above, because regression analysis techniques operate in view of causal factors and corresponding weights to provide insight of an influence to an independent variable, information related to priors (override factors) does not apply to regression analysis techniques. The example causal factor manager 104 and example causal factor weighting engine 106 of the illustrated example retrieve and/or otherwise receive the causal factors of interest and associated weights. The example scaling factor engine 112 calculates and/or otherwise generates scaling factors based on a ratio of the factor values and corresponding weights in a manner consistent with example Equation 2.

$$s_i = \frac{\sqrt{\sum_{j=1}^{N} w_j x_{ij}^2}}{\sqrt{\sum_{j=1}^{N} w_j}}$$

*Equation 2.*

In the illustrated example of Equation 2, $s_i$ represents a scaling factor for the $i^{th}$ coefficient. To allow priors to be used in a regression analysis, the example scaling factor engine 112 scales artificial observations to balance changes in residuals obtained by changes in corresponding regression coefficients. As shown in the functional form of example Equation 2, the scaling factor is designed to produce a penalty proportional to the causal factors' contributions.

The example coefficient manager 116 of FIG. 1 identifies and/or otherwise selects output coefficients associated with each causal coefficient factor of interest ($\beta_i$). Additionally, the example override factor manager 120 identifies and/or otherwise selects prior coefficients (override factors) ($\beta_{pi}$) associated with each of the causal factors coefficients of interest ($\beta_i$). To associate each override coefficient factor ($\beta_{pi}$) with a weight ($w_{pi}$), the example override factor manager 120 accesses the example override factor storage 122. As described above, to allow one or more tradeoffs between model fit and stability to be appreciated, the example scaling factor engine 112 associates each output coefficient and override factor with corresponding scaling factors in a manner consistent with example Equation 3.

$$\left(\frac{\lambda}{2}\right) \sum_{i=1}^{M} w_{pi} \left(s_i \beta_i - s_i \beta_{pi}\right)^2$$

*Equation 3.*

In the illustrated example of Equation 3, $\lambda$, represents an outer scaling factor model weight, which is sometimes referred to as a penalty weight. Additionally, M represents a number of priors of interest (a number of override factors of interest), $\beta_i$ represents the previous coefficient from a regression analysis (e.g., the coefficient associated with the factor of interest), and $\beta_{pi}$ represents a prior coefficient of interest (an override coefficient that is believed to be true and/or otherwise more accurate than what a standard regression previously determined).

The illustrated example of Equation 3 is applicable to a regression analysis because it includes artificial observations by way of the scaling factor $s_i$. While example Equation 3 reflects a functional form of the stability function, the example scaling factor engine 112 may build and/or otherwise generate a matrix-based representation of the stability function.

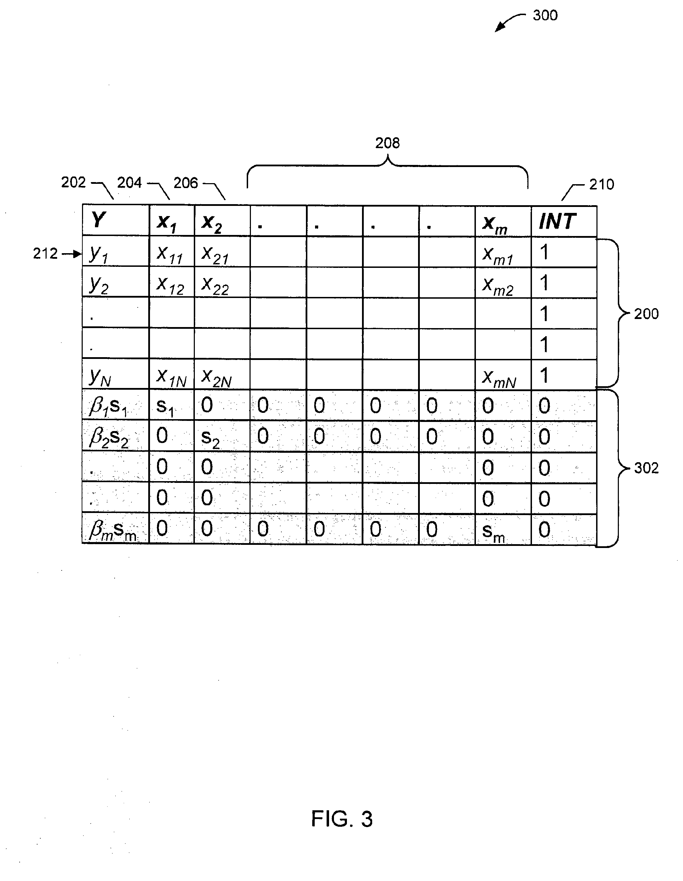

FIG. 3 is an example matrix representation 300 of the regression fit function of FIG. 2 and the stability function of Equation 3 appended thereto. In the illustrated example of FIG. 3, the example function build engine 110 combines the artificial observations 302 with the regression fit model 200 and includes priors ($\beta$) and scaling factors ($s$). The combined artificial observations 302 and the regression fit model 200 may be solved via a regression methodology in a manner consistent with example Equation 4.

$$\sum_{j=1}^{N} w_j(y_i - \overline{y}_j)^2 + \left(\frac{\lambda}{2}\right)\sum_{i=1}^{M} w_{pi}(s_i\beta_i - s_i\beta_{pi})^2 \qquad \text{Equation 4.}$$

In the illustrated example Equation 4, the functional form to the left of the addition sign (+) is the fit function, and the functional form to the right of the addition sign is the stability function. In operation, the example scaling factor engine 112 generates a candidate list of outer scaling values to be inserted into the factor $\left(\frac{\lambda}{2}\right)$.

Generally speaking, the prior coefficient ($\beta_{pi}$) represents a coefficient value that is derived and/or otherwise identified (e.g., learned by empirical analyst observation(s)) and believed to be more accurate than a coefficient value derived and/or otherwise generated by a standard regression process. Each prior coefficient ($\beta_{pi}$) includes a corresponding weight $w_{pi}$ that reflects a degree of confidence that the prior coefficient should be considered more strongly. The example scaling factor engine 112 may store a default and/or user defined set of weights ($w_{pi}$), such as a set of fifteen weights in a comma-delimited file (e.g., [0.4, 0.8, 1.2, 1.6, 2.0, 2.4, 2.8, 3.2, 3.6, 4.0, 4.4, 4.8, 5.2, 5.6, 6.0]). Additionally, the outer scaling factor model weight $\lambda$ (penalty factor) adjusts the combined regression of example Equation 4 to reflect an emphasis on strong measures of fit (e.g., relatively low values of $\lambda$), an emphasis on strong stability (e.g., relatively high values of $\lambda$, which favors influences of the priors), or a balance between measures of fit and stability. In the event the penalty factor is set to a value of one (1), then the combined regression model completely favors priors over previously calculated coefficients generated via standard regression techniques. One or more values of the penalty factor may be applied by the example regression engine 124 to develop one or more models via the combined regression model of example Equation 4 and/or the combined matrix of FIG. 3, each of which may reflect coefficient outputs that reflect differing degrees of adherence to fit and stability.

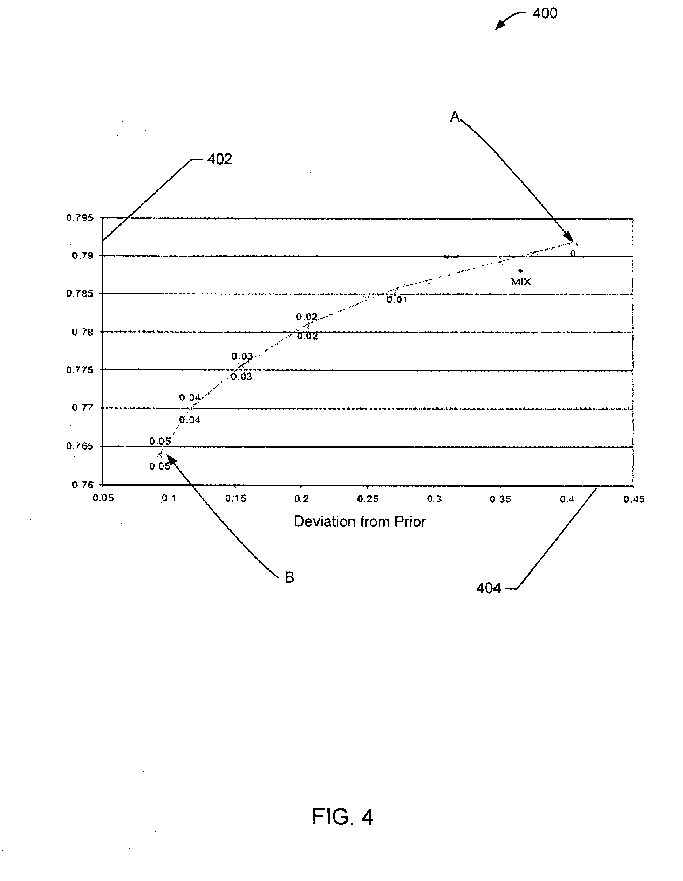

The example comparison engine 126 of FIG. 1 generates one or more outputs that illustrate the different degrees of adherence to fit or stability, depending on the selected values of the penalty factor ($\lambda$). FIG. 4 illustrates an example comparison chart 400 having a fit axis 402, a stability axis 404, and data points indicative of weights applied to priors. In the illustrated example of FIG. 4, larger values on the example fit axis 402 indicate a greater deference to a traditional regression model at the expense of the priors. For example, point A reflects an absence of weight applied to the priors, which results in a relatively high degree of fitness. On the other hand, point B reflects a relatively extreme deference to the influence of the priors (overrides) at the expense of the traditional regression model output(s).

While an example manner of implementing the combination engine 102 of FIG. 1 is illustrated in FIGS. 1-4, one or more of the elements, processes and/or devices illustrated in FIG. 1-4 may be combined, divided, re-arranged, omitted, eliminated and/or implemented in any other way. Further, the example causal factor manager 104, the example causal factor weighting engine 106, the example causal factor weight storage 108, the example function build engine 110, the example scaling factor engine 112, the example scaling factor storage 114, the example coefficient manager 116, the example coefficient storage 118, the example override factor manager 120, the example override factor storage 122, the example regression engine 124, the example comparison engine 126 and/or, more generally, the example combination engine 102 of FIG. 1 may be implemented by hardware, software, firmware and/or any combination of hardware, software and/or firmware. Thus, for example, any of the example causal factor manager 104, the example causal factor weighting engine 106, the example causal factor weight storage 108, the example function build engine 110, the example scaling factor engine 112, the example scaling factor storage 114, the example coefficient manager 116, the example coefficient storage 118, the example override factor manager 120, the example override factor storage 122, the example regression engine 124, the example comparison engine 126 and/or, more generally, the example combination engine 102 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, causal factor manager 104, the example causal factor weighting engine 106, the example causal factor weight storage 108, the example function build engine 110, the example scaling factor engine 112, the example scaling factor storage 114, the example coefficient manager 116, the example coefficient storage 118, the example override factor manager 120, the example override factor storage 122, the example regression engine 124, the example comparison engine 126 and/or, more generally, the example combination engine 102 is/are hereby expressly defined to include a tangible computer readable storage device or storage disk such as a memory, a digital versatile disk (DVD), a compact disk (CD), a Blu-ray disk, etc. storing the software and/or firmware. Further still, the example combination engine 102 of FIG. 1 may include one or more elements, processes and/or devices in addition to, or instead of, those illustrated in FIGS. 1-4, and/or may include more than one of any or all of the illustrated elements, processes and devices.

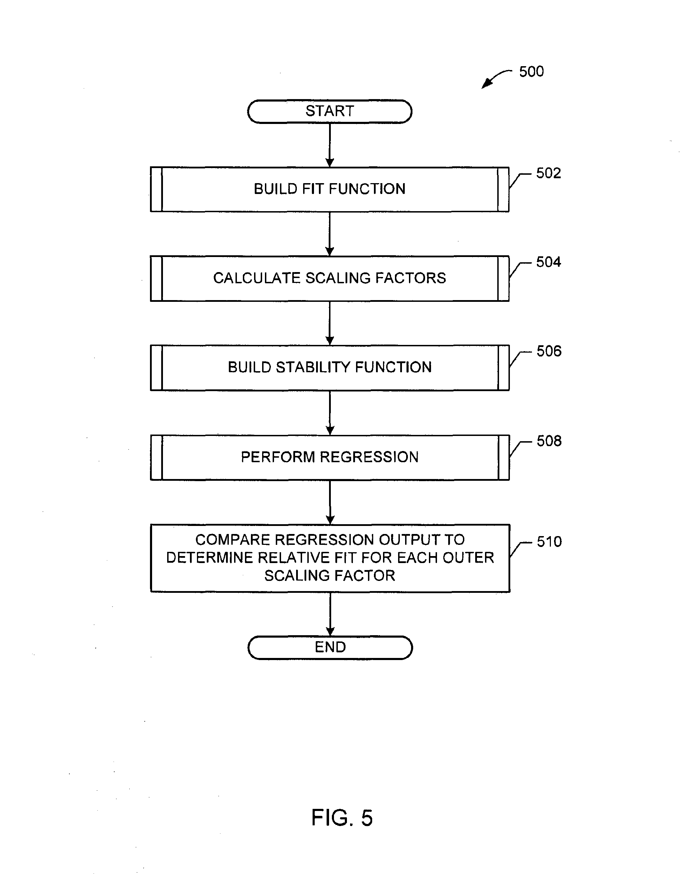

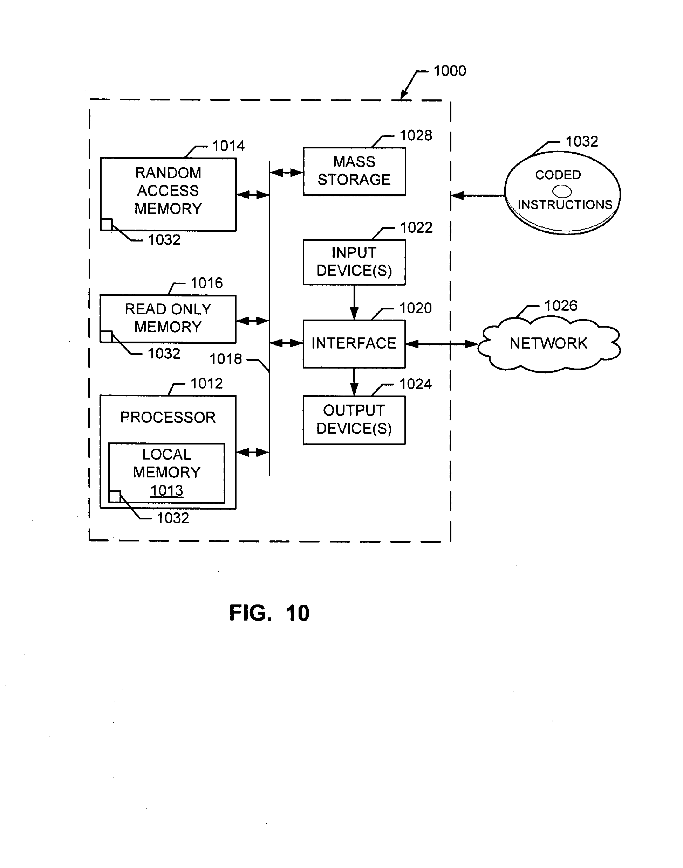

A flowchart representative of example machine readable instructions for implementing the combination engine 102 of FIG. 1 is shown in FIGS. 5-9. In this example, the machine readable instructions comprise a program for execution by a processor such as the processor 1012 shown in the example processor platform 1000 discussed below in connection with FIG. 10. The program may be embodied in software stored on a tangible computer readable storage medium such as a CD-ROM, a floppy disk, a hard drive, a digital versatile disk (DVD), a Blu-ray disk, or a memory associated with the processor 1012, but the entire program and/or parts thereof could alternatively be executed by a device other than the processor 1012 and/or embodied in firmware or dedicated hardware. Further, although the example program is described with reference to the flowchart illustrated in FIGS. 5-9, many other methods of implementing the example combination engine 102 may alternatively be used. For example, the order of execution of the blocks may be changed, and/or some of the blocks described may be changed, eliminated, or combined.

As mentioned above, the example processes of FIGS. 5-9 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals. As used herein, "tangible computer readable storage medium" and "tangible machine readable storage medium" are used interchangeably. Additionally or alternatively, the example processes of FIGS. 5-9 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable device or disk and to exclude propagating signals. As used herein, when the phrase "at least" is used as the transition term in a preamble of a claim, it is open-ended in the same manner as the term "comprising" is open ended.

The program 500 of FIG. 5 begins at block 502 where the example function build engine 110 builds and/or otherwise generates a fit function. The example scaling factor engine 112 calculates one or more scaling factors (block 504), and the example function build engine 110 builds a stability function based on the example one or more scaling factors (block 506). A combined fit and stability function is built by the example function build engine 110 to facilitate regression processes associated with priors (block 508), and the example comparison engine 126 generates one or more charts, graphs and/or other data representations of the combined fit and stability function in view of differing penalty weights to reflect a greater deference to measures of fit versus measures of stability (block 510).

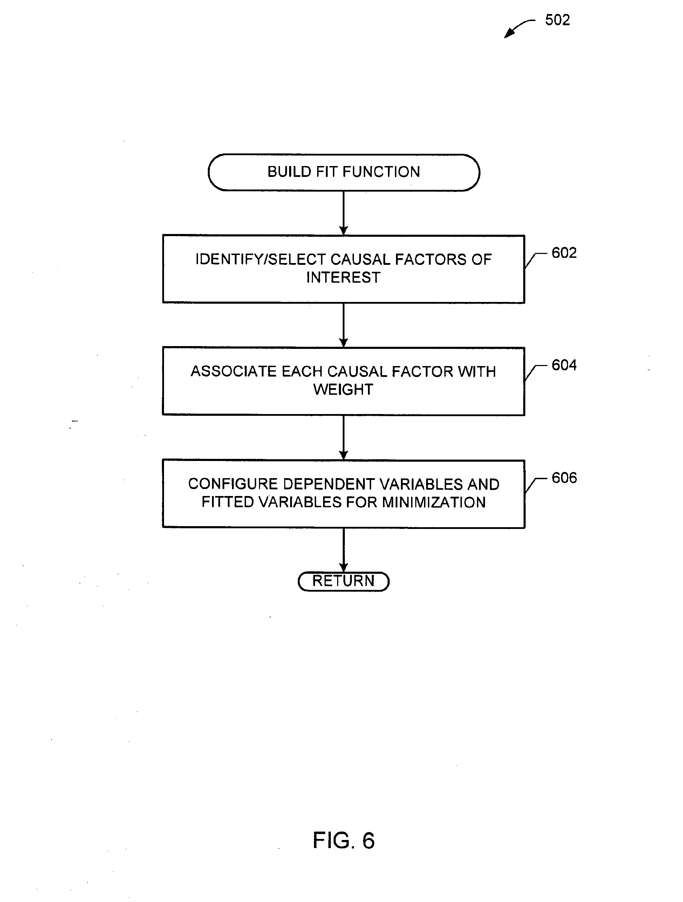

FIG. 6 illustrates an example manner of implementing (block 502). In the illustrated example of FIG. 6, the example causal factor manager 104 identifies and/or otherwise selects causal factors of interest (block 602). As described above, the example causal factors relate to independent variables that may cause an effect on one or more dependent variables. Independent variables may include, for example, promotional activity, seasonality and/or competitive activity. Dependent variables may include, for example, sales and/or units sold. The example causal factor weighting engine 106 associates each causal factor with a weight (block 604), and the example function build engine 110 configures dependent variables and fitted variables for minimization (block 606). Control then returns to block 504 of the program 500 of FIG. 5.

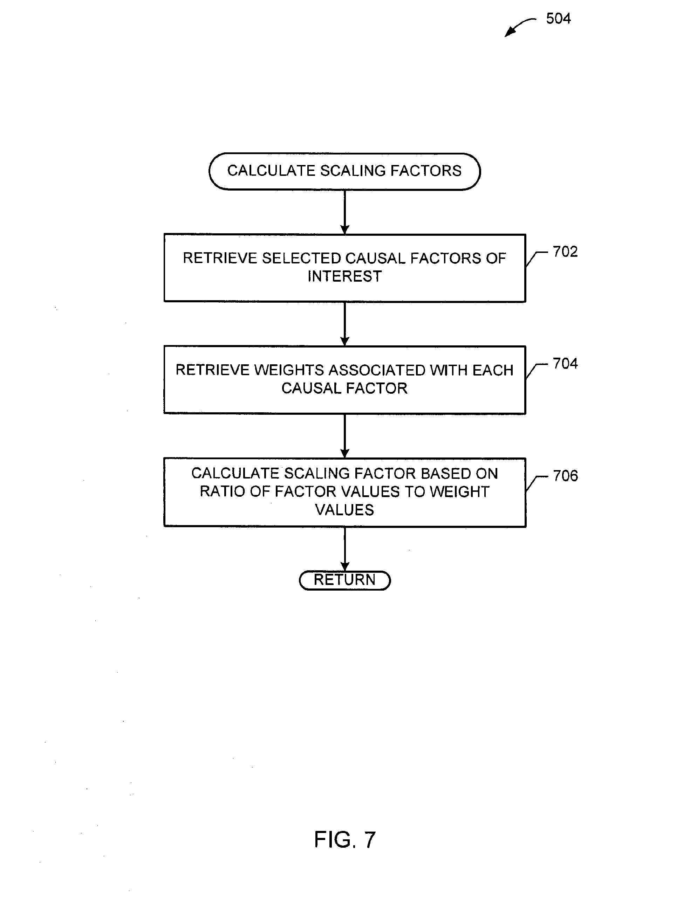

FIG. 7 illustrates an example manner of implementing block 504 of FIG. 5. In the illustrated example of FIG. 7, the example causal factor manager 104 retrieves the previously selected causal factors of interest (block 702) and the example causal factor weighting engine 106 retrieves the corresponding weights associated with each causal factor of interest (block 704). The example scaling factor engine 112 calculates a scaling factor based on a ratio of the factor values and corresponding weights (block 706). As discussed above, the example scaling factor engine 112 may calculate the scaling factor in a manner consistent with example Equation 2. Control then returns to block 506 of FIG. 5.

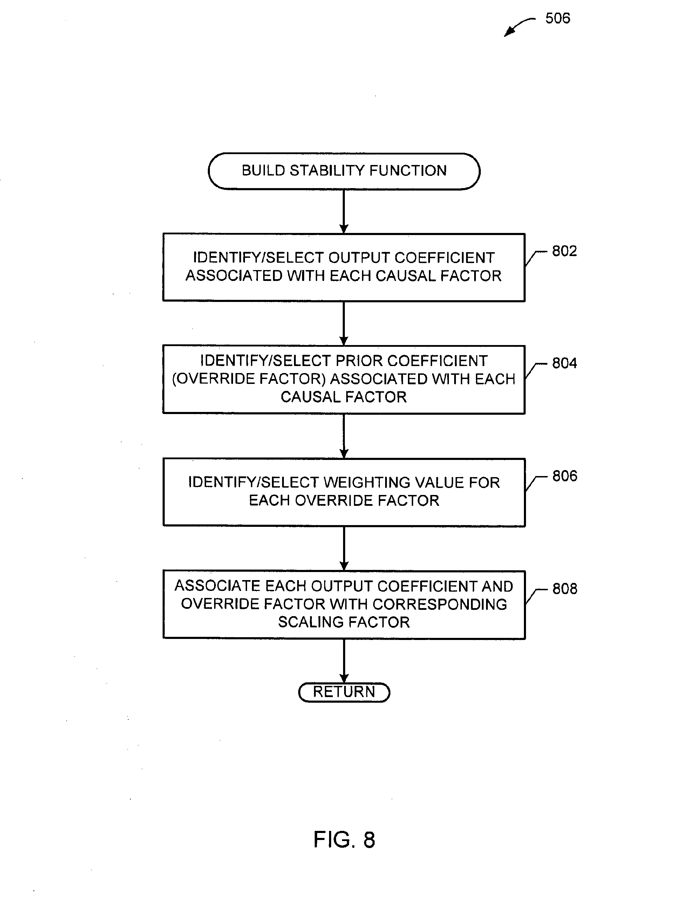

FIG. 8 illustrates an example manner of implementing block 506 of FIG 5. In the illustrated example of FIG. 8, the example coefficient manager 116 identifies and/or otherwise selects one or more output coefficients associated with each causal factor ($\beta_i$) (block 802). As described above, the output coefficients associated with each causal factor ($\beta_i$) may be obtained from one or more prior regressions of the causal factors, but the example override factor manager 120 identifies and/or otherwise selects one or more priors (override factors) associated with each causal factor (block 804). Additionally, each of the selected override factors has a corresponding weight assigned and/or selected by the example override factor manager 120 (block 806). As discussed above, some override factors (priors) are weighted with a greater or lesser value depending on how confident an analyst is on their corresponding influences on the dependent variable of interest (e.g., sales). The example scaling factor engine associates each output coefficient and override factor with the corresponding example scaling factors calculated above (block 808). Control then returns to block 508 of FIG. 5.

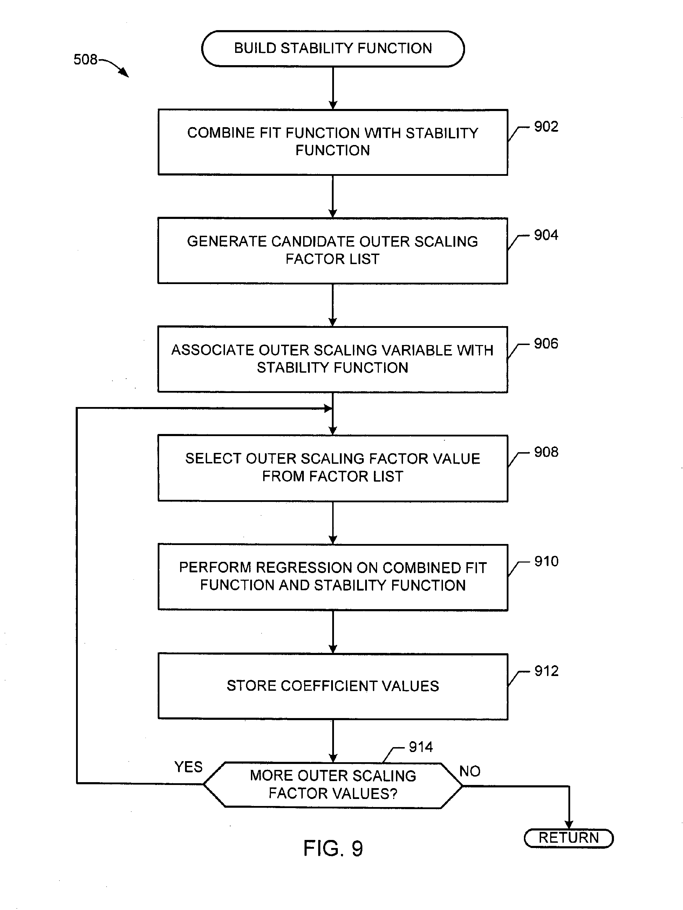

FIG. 9 illustrates an example manner of implementing block 508. In the illustrated example of FIG. 9, the example function build engine combines the example fit function and stability function in a manner consistent with example Equation 4 (block 902). The example scaling factor engine generates and/or otherwise retrieves candidate outer scaling factor ($\lambda$) values from a list (block 904). As discussed above, the scaling factor values may range between zero (0) and one (1), in which a value of one mathematically favors the override values at the expense of previously calculated regression coefficients (strong stability), while a value of zero mathematically favors the previously calculated regression coefficients without influence from the priors (strong measure of fit). Additionally or alternatively, the example override manager 120 may generate and/or otherwise retrieve a list (e.g., a list of override weights prepared by an analyst) that is to be applied to one or more iterations of a combined regression analysis in view of the priors.

The example function build engine 110 associates the outer scaling variable ($\lambda$) with the stability function (block 906) in a manner consistent with example Equations 3 and 4, and selects one of the values from the list to be applied during a regression iteration (block 908). The example regression engine 124 performs a regression on the combined fit and stability function (block 910) in a manner consistent with example Equation 4 and stores the resulting coefficient values (block 912) for later comparison. In the event there are one or more additional outer scaling factors of interest (e.g., from the list) and/or if there are one or more additional and/or alternate prior weighting values of interest (block 914), control returns to block 908 to apply such alternate values to the combined regression function. Otherwise, control returns to block 510 of the example program 500 of FIG. 5.

The example comparison engine 126 compares the outputs from the combined regression iterations to identify how each of the combined regression models perform in view of measures of fit and stability (block 510). As described above in connection with FIG. 4, the example penalty factor ($\lambda$) will result in a greater mathematical influence on the previous regression coefficients when set to values closer to zero, while a greater deference to the priors will result when the penalty factor ($\lambda$) value is set closer to one.

FIG. 10 is a block diagram of an example processor platform 1000 capable of executing the instructions of FIGS. 5-9 to implement the combination engine 102 of FIG. 1. The processor platform 1000 can be, for example, a server, a personal computer, or any other type of computing device.

The processor platform 1000 of the illustrated example includes a processor 1012. The processor 1012 of the illustrated example is hardware. For example, the processor 1012 can be implemented by one or more integrated circuits, logic circuits, microprocessors or controllers from any desired family or manufacturer.

The processor 1012 of the illustrated example includes a local memory 1013 (e.g., a cache). The processor 1012 of the illustrated example is in communication with a main memory including a volatile memory 1014 and a non-volatile memory 1016 via a bus 1018. The volatile memory 1014 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1016 may be implemented by flash memory and/or any other desired type of memory device. Access to the main memory 1014, 1016 is controlled by a memory controller.

The processor platform 1000 of the illustrated example also includes an interface circuit 1020. The interface circuit 1020 may be implemented by any type of interface standard, such as an Ethernet interface, a universal serial bus (USB), and/or a PCI express interface.

In the illustrated example, one or more input devices 1022 are connected to the interface circuit 1020. The input device(s) 1022 permit(s) a user to enter data and commands into the processor 1012. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 1024 are also connected to the interface circuit 1020 of the illustrated example. The output devices 1024 can be implemented, for example, by display devices (e.g., a light emitting diode (LED), an organic light emitting diode (OLED), a liquid crystal display, a cathode ray tube display (CRT), a touchscreen, a tactile output device, a light emitting diode (LED), a printer and/or speakers). The interface circuit 1020 of the illustrated example, thus, typically includes a graphics driver card, a graphics driver chip or a graphics driver processor.

The interface circuit 1020 of the illustrated example also includes a communication device such as a transmitter, a receiver, a transceiver, a modem and/or network interface card to facilitate exchange of data with external machines (e.g., computing devices of any kind) via a network 1026 (e.g., an Ethernet connection, a digital subscriber line (DSL), a telephone line, coaxial cable, a cellular telephone system, etc.).

The processor platform 1000 of the illustrated example also includes one or more mass storage devices 1028 for storing software and/or data. Examples of such mass storage devices 1028 include floppy disk drives, hard drive disks, compact disk drives, Blu-ray disk drives, RAID systems, and digital versatile disk (DVD) drives.

The coded instructions 1032 of FIGS. 5-9 may be stored in the mass storage device 1028, in the volatile memory 1014, in the non-volatile memory 1016, and/or on a removable tangible computer readable storage medium such as a CD or DVD.

Example methods, apparatus and articles of manufacture have been disclosed to facilitate the ability for priors to be considered during a regression analysis, thereby reducing (e.g., minimizing) an amount of time analysts spend adjusting causal factors and corresponding weights to a marketing mix model. The priors may be iteratively calculated in a regression to generate output coefficients influenced by different degrees of previously calculated regression coefficients (e.g., a closeness of fit to a previous regression model) and different degrees of priors (e.g., override factors having weights indicative of a degree of confidence in their validity).

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

**Claims**

1. A method to include override factors in a regression model, comprising:

   building, with a processor, a fit function based on causal factors associated with a marketing mix model;
   building, with the processor, a stability function based on override factors associated with corresponding ones of the causal factors; and
   integrating, with the processor, scaling factors into the stability function to facilitate a combined regression analysis of the fit function and the stability function, the scaling factors respectively associated with corresponding causal factors.

2. A method as defined in claim 1, further comprising increasing a mathematical influence of previous regression coefficient values in response to decreasing the scaling factors.

3. A method as defined in claim 1, wherein the fit function comprises a regression model to minimize a difference between predicted dependent variables and actual dependent variables.

4. A method as defined in claim 1, further comprising generating coefficients of the combined regression analysis, the coefficients based on a penalty factor to influence a mathematical measure of fit.

5. A method as defined in claim 4, further comprising iterating the combined regression analysis with a set of penalty factors to generate a plurality of output models to compare with the mathematical measure of fit.

6. An apparatus to include override factors in a regression model, comprising:

   a causal factor manager to build a fit function based on causal factors associated with a marketing mix model, and to build a stability function based on override factors associated with corresponding ones of the causal factors; and
   a scaling factor engine to integrate scaling factors into the stability function to facilitate a combined regression analysis of the fit function and the stability function, the scaling factors respectively associated with corresponding causal factors.

7. An apparatus as defined in claim 6, further comprising an override factor manager to increase a mathematical influence of the override factors in response to increasing the scaling factors.

8. An apparatus as defined in claim 6, wherein the scaling factor engine is to apply a ratio of causal factor values and causal weight values.

9. An apparatus as defined in claim 6, further comprising a regression engine to apply a regression model to minimize a difference between previously calculated regression coefficients and the override factors.

10. A computer program comprising instructions that, when executed, cause a machine to, at least:

    build a fit function based on causal factors associated with a marketing mix model;
    build a stability function based on override factors associated with corresponding ones of the causal factors; and
    integrate scaling factors into the stability function to facilitate a combined regression analysis of the fit function and the stability function, the scaling factors respectively associated with corresponding causal factors.

11. A computer program as defined in claim 10, wherein the instructions, when executed, cause the machine to increase a mathematical influence of the override factors in response to increasing the scaling factors.

12. A computer program as defined in claim 10, wherein the instructions, when executed, cause the machine to apply the scaling factors as a ratio of causal factor values and causal weight values.

13. A computer program as defined in claim 10, wherein the instructions, when executed, cause the machine to minimize a difference between predicted dependent variables and actual dependent variables.

14. A computer program as defined in claim 10, wherein the instructions, when executed, cause the machine to generate coefficients of the combined regression analysis, the coefficients based on a penalty factor to influence a mathematical measure of fit.

15. A computer program as defined in claim 14, wherein the instructions, when executed, cause the machine to iterate the combined regression analysis with a set of penalty factors to generate a plurality of output models to compare with the mathematical measure of fit.

FIG. 1

200

| Y | $x_1$ | $x_2$ | . | . | . | . | $x_m$ | INT |
|---|---|---|---|---|---|---|---|---|
| $y_1$ | $x_{11}$ | $x_{21}$ | | | | | $x_{m1}$ | 1 |
| $y_2$ | $x_{12}$ | $x_{22}$ | | | | | $x_{m2}$ | 1 |
| . | | | | | | | | 1 |
| . | | | | | | | | 1 |
| $y_N$ | $x_{1N}$ | $x_{2N}$ | | | | | $x_{mN}$ | 1 |

FIG. 2

| Y | $X_1$ | $X_2$ | . | . | . | . | $X_m$ | INT |
|---|---|---|---|---|---|---|---|---|
| $y_1$ | $X_{11}$ | $X_{21}$ | | | | | $X_{m1}$ | 1 |
| $y_2$ | $X_{12}$ | $X_{22}$ | | | | | $X_{m2}$ | 1 |
| . | | | | | | | | 1 |
| . | | | | | | | | 1 |
| $y_N$ | $X_{1N}$ | $X_{2N}$ | | | | | $X_{mN}$ | 1 |
| $\beta_1 s_1$ | $s_1$ | 0 | 0 | 0 | 0 | 0 | 0 | 0 |
| $\beta_2 s_2$ | 0 | $s_2$ | 0 | 0 | 0 | 0 | 0 | 0 |
| . | 0 | 0 | | | | | 0 | 0 |
| . | 0 | 0 | | | | | 0 | 0 |
| $\beta_m s_m$ | 0 | 0 | 0 | 0 | 0 | 0 | $s_m$ | 0 |

FIG. 3

FIG. 4

500

START

BUILD FIT FUNCTION — 502

CALCULATE SCALING FACTORS — 504

BUILD STABILITY FUNCTION — 506

PERFORM REGRESSION — 508

COMPARE REGRESSION OUTPUT TO DETERMINE RELATIVE FIT FOR EACH OUTER SCALING FACTOR — 510

END

FIG. 5

502

```
        ┌─────────────────────────────┐
        │      BUILD FIT FUNCTION      │
        └─────────────────────────────┘
                       │
                       ▼
        ┌─────────────────────────────┐
        │ IDENTIFY/SELECT CAUSAL       │──── 602
        │ FACTORS OF INTEREST          │
        └─────────────────────────────┘
                       │
                       ▼
        ┌─────────────────────────────┐
        │ ASSOCIATE EACH CAUSAL        │──── 604
        │ FACTOR WITH WEIGHT           │
        └─────────────────────────────┘
                       │
                       ▼
        ┌─────────────────────────────┐
        │ CONFIGURE DEPENDENT          │──── 606
        │ VARIABLES AND FITTED         │
        │ VARIABLES FOR MINIMIZATION   │
        └─────────────────────────────┘
                       │
                       ▼
                  ( RETURN )
```

FIG. 6

504

CALCULATE SCALING FACTORS

RETRIEVE SELECTED CAUSAL FACTORS OF INTEREST — 702

RETRIEVE WEIGHTS ASSOCIATED WITH EACH CAUSAL FACTOR — 704

CALCULATE SCALING FACTOR BASED ON RATIO OF FACTOR VALUES TO WEIGHT VALUES — 706

RETURN

FIG. 7

506

BUILD STABILITY FUNCTION

IDENTIFY/SELECT OUTPUT COEFFICIENT ASSOCIATED WITH EACH CAUSAL FACTOR — 802

IDENTIFY/SELECT PRIOR COEFFICIENT (OVERRIDE FACTOR) ASSOCIATED WITH EACH CAUSAL FACTOR — 804

IDENTIFY/SELECT WEIGHTING VALUE FOR EACH OVERRIDE FACTOR — 806

ASSOCIATE EACH OUTPUT COEFFICIENT AND OVERRIDE FACTOR WITH CORRESPONDING SCALING FACTOR — 808

RETURN

FIG. 8

508

BUILD STABILITY FUNCTION

COMBINE FIT FUNCTION WITH STABILITY FUNCTION — 902

GENERATE CANDIDATE OUTER SCALING FACTOR LIST — 904

ASSOCIATE OUTER SCALING VARIABLE WITH STABILITY FUNCTION — 906

SELECT OUTER SCALING FACTOR VALUE FROM FACTOR LIST — 908

PERFORM REGRESSION ON COMBINED FIT FUNCTION AND STABILITY FUNCTION — 910

STORE COEFFICIENT VALUES — 912

YES / MORE OUTER SCALING FACTOR VALUES? — 914 \ NO

RETURN

FIG. 9

FIG. 10

**EP 2 685 414 A1**

Europäisches Patentamt
European Patent Office
Office européen des brevets

**EUROPEAN SEARCH REPORT**

Application Number

EP 13 00 3480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * | 1-15 | INV. G06Q30/02 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 12 September 2013 | Bassanini, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 00 3480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | - - - - - | | |

TECHNICAL FIELDS
SEARCHED      (IPC)

The present search report has been drawn up for all claims

| Place of search | Date of completion of the search | Examiner |
|---|---|---|
| The Hague | 12 September 2013 | Bassanini, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

               

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61670418 A